# EUROPÄISCHE PATENTSCHRIFT

(11) **EP 1 712 445 B1**
(45) Veröffentlichungstag und Bekanntmachung des Hinweises auf die Patenterteilung: **05.11.2008**
(21) Anmeldenummer: 06101182.1
(22) Anmeldetag: 02.02.2006
(51) Int. Cl.: B61H 11/14, B60T 8/17, B60T 8/173, B61H 7/08

(54) **Schienenfahrzeug, insbesondere Triebwagenzug, mit Drehgestellen und Magnetschienenbremsen**
Railway vehicle, especially multiple unit train, with bogie and magnetic rail brake.
Véhicule ferroviaire, notamment à unités multiples, avec bogie à frein magnétique.

(30) Priorität: 07.04.2005 DE 102005016164
(43) Veröffentlichungstag der Anmeldung: 18.10.2006
(73) Patentinhaber: SIEMENS AKTIENGESELLSCHAFT, 80333 München (DE)
(72) Erfinder: Schoof, Claus-Georg, 47877, Willich (DE)

(56) Entgegenhaltungen:
- EP-A- 1 145 929
- WO-A-20/04054840

## Beschreibung

Die Erfindung betrifft ein Schienenfahrzeug gemäß dem Oberbegriff des Anspruchs 1.

Vor allem Triebwagenzüge mit wenig Drehgestellen und damit wenig Radsätzen - wie beispielsweise der Baureihen ET 424-426 und VT 642 der Deutschen Bahn AG - benötigen für einen sicheren Betrieb häufig Magnetschienenbremsen. Neben der durch diese Magnete ausgeübten Bremswirkung bewirken die Magnete eine Reinigung der Schienenoberfläche und erhöhen dadurch für nachlaufende Radsätze den nutzbaren Reibwert zwischen Rad und Schiene der auf die Räder wirkenden Bremsen, die häufig als Scheibenbremsen ausgeführt sind. Von besonderer Bedeutung ist diese Reinigungswirkung im Herbst, wenn aufgrund der Witterungsverhältnisse und herab fallendem Laub schmierige Schienen vorhanden sind. Es ist daher bei Zügen mit wenig Radsätzen vorteilhaft, möglichst viele der vorhandenen Drehgestelle mit Magnetschienenbremsen auszurüsten. Eine derartige Magnetschienenbremse ist z.B. in der EP-A-1145929 offenbart. Häufig sind aber gerade an den führenden Drehgestellen Magnetschienenbremsen von Seiten der Signaltechnik unerwünscht, da Störungen signaltechnischer Anlagen befürchtet werden. Deshalb wurde häufig darauf verzichtet, Magnetschienenbremsen in Enddrehgestelle einzubauen. Das Bremsvermögen von Zügen mit wenig Radsätzen wird dadurch empfindlich reduziert.

Um nun das Bremsvermögen zu optimieren, besteht ein erster Aspekt die Erfindung darin, auch die Enddrehgestelle des Fahrzeuges mit Magnetschienenbremsen auszurüsten, diese aber elektrisch so zu schalten, dass die Magnetschienenbremse des in Fahrtrichtung führenden Drehgestelles bei Schnellbremsung nicht automatisch aktiviert wird. So lässt sich zumindest die Bremskraft der Magnetschienenbremse im nachlaufenden Enddrehgestell bei Schnellbremsung automatisch nutzen.

Zusätzlich ist vorstellbar, dass bei Aktivierung der Magnetschienenbremsen durch den Fahrer über ein besonderes Bedienelement auch die Magnetschienenbremse im führenden Drehgestell aktiviert werden kann.

Ein zweiter Aspekt der Erfindung besteht darin, dass die Magnetschienenbremse im führenden Drehgestell automatisch aktiviert wird, wenn die Gleitschutzeinrichtung des Fahrzeuges Radschlüpf oberhalb einer definierten Grenze bei Schnellbremsung ermittelt. In dem Fall, dass schmierige Schienen ein sicheres Anhalten des Fahrzeuges beispielsweise vor Hauptsignalen gefährden, ist es sinnvoll, an Stelle eines Unfalles eine Störung signaltechnischer Anlagen durch die manuell oder automatisch aktivierte Magnetschienenbremse des führenden Drehgestelles in Kauf zu nehmen.

Der besondere Vorteil der erfindungsgemäßen Lösungen besteht darin, dass auch Züge mit einer geringen Anzahl von Radsätzen, bei denen entsprechend wenig Drehgestelle zur Ausrüstung mit Magnetschienenbremsen vorhanden sind, mit der maximal möglichen Anzahl von Magnetschienenbremsen ausgerüstet werden können, und zwar ohne erhöhtes Risiko, die Signaltechnik bei Schnellbremsung zu stören. In Notfällen, wenn insbesondere schmierige Schienen zu erheblichen Bremsverlängerungen führen oder beim Erkennen eines Hindernisses auf einem Bahnübergang, kann zusätzlich die Bremskraft der in der Regel unbenutzten Magnetschienenbremse im führenden Drehgestell aktiviert und so das Risiko eines Unfalls oder seiner Folgen reduziert werden.

## Patentansprüche

1. Schienenfahrzeug, insbesondere Triebwagenzug, das mit Magnetschienenbremsen versehene Drehgestelle aufweist, **dadurch gekennzeichnet, dass** die Enddrehgestelle des Fahrzeuges mit Magnetschienenbremsen ausgerüstet sind, die elektrisch derart geschaltet sind, dass die Magnetschienenbremse des in Fahrtrichtung führenden Drehgestelles bei Schnellbremsung nicht automatisch aktiviert wird, wobei die Bremskraft der Magnetschienenbremse im nachlaufenden Enddrehgestell bei Schnellbremsung automatisch genutzt wird.

2. Schienenfahrzeug nach Anspruch 1, **dadurch gekennzeichnet, dass** bei Aktivierung der Magnetschienenbremsen durch den Fahrer über ein besonderes Bedienelement auch die Magnetschienenbremse im führenden Drehgestell zu aktivierten ist.

3. Schienenfahrzeug nach Anspruch 1 oder 2, **dadurch gekennzeichnet, dass** die Magnetschienenbremse im führenden Drehgestell automatisch aktiviert wird, wenn die Gleitschutzeinrichtung des Fahrzeuges Radschlupf oberhalb einer definierten Grenze bei Schnellbremsung ermittelt.

## Claims

1. Rail vehicle, in particular a locomotive vehicle, which has bogeys provided with magnetic rail brakes, **characterized in that** the end bogeys of the vehicle are equipped with magnetic rail brakes which are electrically connected such that the magnetic rail brake of the leading bogey in the direction of travel is not activated automatically on rapid braking, with the braking force of the magnetic rail brake in the trailing end bogey being used automatically for rapid braking.

2. Rail vehicle according to Claim 1, **characterized in that**, on activation of the magnetic rail brakes by the driver, by means of a special control element, the magnetic rail brake in the leading bogey can also be activated.

3. Rail vehicle according to Claim 1 or 2, **characterized in that** the magnetic rail brake in the leading bogey is activated automatically when the vehicle skid protection device determines wheel slipping above a defined limit for rapid braking.

## Revendications

1. Véhicule ferroviaire, notamment élément automoteur, qui a des bogies munis de freins électromagnétiques sur rail, **caractérisé en ce que** les bogies d'extrémité du véhicule sont équipés des freins électromagnétiques sur rail qui sont montés électriquement de façon à ce que le frein électromagnétique sur rail, du bogie menant dans le sens de la marche ne soit pas activé automatiquement en cas de freinage rapide, la force de freinage du frein électromagnétique sur rail étant utilisée automatiquement dans le bogie d'extrémité suivant en cas de freinage rapide.

2. Véhicule ferroviaire suivant la revendication 1, **caractérisé en ce que**, lors de l'activation des freins électromagnétiques sur rail par le conducteur, le frein électromagnétique sur rail dans le bogie menant peut être activé aussi par un élément de manoeuvre particulier.

3. Véhicule ferroviaire suivant la revendication 1 ou 2, **caractérisé en ce que** le frein électromagnétique sur rail du bogie menant est activé automatiquement lorsque le dispositif anti-enrayeur du véhicule détermine en cas de freinage rapide un patinage de roue supérieur à une limite définie.
